# EUROPEAN PATENT SPECIFICATION

(11) **EP 2 307 183 B1**
(45) Date of publication and mention of the grant of the patent: **22.02.2012**
(21) Application number: 09802600.8
(22) Date of filing: 28.07.2009
(51) Int. Cl.: B29C 49/36, B29C 49/78, B29C 49/42, B65G 29/00, B65G 47/84, B65G 33/04

(54) **PLANT AND PROCESS FOR BLOW-MOULDING PLASTIC CONTAINERS, PARTICULARLY BOTTLES.**
ANLAGE UND VERFAHREN ZUM BLASFORMEN VON KUNSTSTOFFBEHÄLTERN, INSBESONDERE FLASCHEN
INSTALLATION ET PROCEDE POUR LE MOULAGE PAR SOUFFLAGE DE CONTENANTS EN PLASTIQUE, NOTAMMENT DE BOUTEILLES

(30) Priority: 29.07.2008 IT BO20080471
(43) Date of publication of application: 13.04.2011
(73) Proprietor: Sacmi Cooperativa Meccanici Imola Societa' Cooperativa, 40026 Imola (IT)
(72) Inventor: BORGATTI, Maurizio, I-40026 Imola (IT); MOROVINGI, Massimo, I-40026 Imola (IT); PARRINELLO, Fiorenzo, I-40059 Medicina (IT); RE, Emilio, I-40126 Bologna (IT); STOCCHI, Gabriele, I-43100 Parma (IT)
(74) Representative: Conti, Marco
(86) International application number: PCT/IB2009/053279
(87) International publication number: WO 2010/013201

(56) References cited:
- EP-A1- 0 066 119
- DE-A1- 19 906 309
- US-A- 5 863 571

## Description

### Technical Field

This invention relates to a plant for blow-moulding plastic containers, particularly bottles.

### Background Art

In the bottling industry, prior art plant for making plastic bottles comprises: a blow-moulding wheel mounted in such a way as to rotate about its longitudinal axis and equipped with a plurality of moulding units, each of which is rotationally fed by the blow-moulding wheel about this axis and normally comprises one or two cavities for blow-moulding respective bottles; a first wheel for transferring the parisons from a parison conditioning oven to the blow-moulding wheel; a first line for feeding parisons to the first transfer wheel; a second transfer wheel for picking up the bottles from the blow-moulding wheel; and a second line for feeding the bottles from the second transfer wheel to a filling machine.

Document DE 19906309 A1 discloses such a plant in accordance with the preamble of claim 1 and a method for blow-moulding plastic containers according to the preamble of claim 9.

Since the use of moulding units with two moulding cavities confers on the blow-moulding wheel a production capacity that is twice the production capacity conferred on the blow-moulding wheel by the use of moulds with a single moulding cavity, the two feed lines are selectively dimensioned to work in conjunction either with two-cavity blow-moulding units or with single-cavity blow-moulding units.

Plant of this kind, however, is relatively limited in flexibility and its output per hour cannot be optimized according to the number of cavities of the moulding units.

Thus, in prior art plant, the filling machine is made to run at a substantially constant speed and when the number of moulding cavities in the moulding units is reduced, the blow-moulding machine is slowed down accordingly.

### Aim of the Invention

This invention has for an aim to provide a plant and a method for blow-moulding plastic containers, particularly bottles, which are free of the above mentioned disadvantages and which make it possible to optimize production output per hour when the number of moulding cavities in the moulding units is varied.

Accordingly, this invention provides a plant for blow-moulding plastic containers, particularly bottles, as described in the appended claims.

More specifically, this invention provides a blow-moulding plant for making plastic containers (in particular bottles) from respective parisons and comprising:
- a blow-moulding line equipped with a plurality of moulding units having one or more cavities for blow-moulding respective containers;
- at least one first transfer wheel for transferring the parisons into the respective moulding cavities;
- at least one second transfer wheel to pick up the containers from the respective moulding cavities;
- a first feed line for feeding the parisons in succession to the first transfer wheel;
- a second feed line for feeding the containers individually from the second transfer wheel to a filling machine;
- actuating means for moving the first and second feed lines at respective variable feed speeds.

According to the invention, the plant comprises means for regulating the speeds of the first and second feed lines of the blow-moulding line and of the first and second transfer wheels according to the number of moulding cavities of the moulding units, connected to the actuating means to vary the speeds of the first and second feed lines relative to the speeds of the blow-moulding line and of the first and second transfer wheels according to a ratio that is a function of the number of moulding cavities.

Preferably, the speed regulating means are designed to vary the feed speeds of the first and second feed lines proportionally to the number of moulding cavities relative to the speeds of the blow-moulding line and of the first and second transfer wheels.

The plant preferably further comprises a dispensing device for feeding the containers to the second feed line according to a defined spacing, the speed regulating means being connected to the dispensing device in order to regulate its speed relative to the speeds of the blow-moulding line and of the first and second transfer wheels according to a fixed ratio to the variable number of moulding cavities.

The plant also comprises further actuating means for moving the first transfer wheel, the blow-moulding line, the second transfer wheel and the dispensing device, the speed regulating means being connected to the further actuating means in order to regulate their speed relative to the speeds of the blow-moulding line and of the first and second transfer wheels according to a fixed ratio to the variable number of moulding cavities.

Preferably, each transfer wheel comprises a plurality of pick-up and transport units mounted around the transfer wheel itself, each pick-up and transporting unit in turn comprising at least two pick-up and transporting members for feeding, respectively, a first number of parisons or containers and a second number of parisons or containers different from the first number, the speed regulating means being connected to the pick-up and transport units to select the pick-up and transport member according to the number of moulding cavities.

The plant preferably further comprises an orienting device for selectively moving the pick-up and transport members between respective rest positions and respective operating positions according to the number of moulding cavities in the moulding units mounted on the blow-moulding line at a given time, the orienting device being connected to the pick-up and transport units to orient the pick-up and transport members according to the number of moulding cavities.

This advantageously makes it possible to optimize production output per hour when the number of moulding cavities in the moulding units is varied, keeping the plant at maximum output capacity when production is changed over to a different bottle blow-moulding size.

The invention also provides a method for blow-moulding plastic containers from respective parisons.

The method according to the invention comprises a step of regulating the speeds of a blow-moulding line equipped with a plurality of moulding units having one or more cavities for blow-moulding respective containers, of a first transfer wheel for transferring the parisons into the respective moulding cavities, of a second transfer wheel to pick up the containers from the respective moulding cavities, of a first feed line for feeding the parisons in succession to the first transfer wheel and of a second feed line for feeding the containers individually from the second transfer wheel to a filling machine, according to the number of moulding cavities in the moulding units, varying the speeds of the first and second feed lines relative to the speeds of the blow-moulding line and of the first and second transfer wheels according to a ratio that is a function of the number of moulding cavities.

Preferably, the ratio is increased according to a linear function when the number of moulding cavities is increased.

### Brief Description of the Drawings

The invention will now be described with reference to the accompanying drawings which illustrate a preferred, non-limiting embodiment of it and in which:
Figure 1 is a schematic plan view, with some parts cut away for clarity, of a preferred embodiment of the plant according to the invention;
Figure 2 is a schematic plan view, with some parts enlarged and others cut away for clarity, of a first detail of the plant of Figure 1;
Figure 3 is a schematic plan view, with some parts cut away for clarity, of a first detail from Figure 2, shown in two different operating conditions;
Figure 4 is a schematic plan view, with some parts cut away for clarity, of a detail from Figure 3, shown in four different operating conditions;
Figure 5 is a schematic side view, with some parts cut away for clarity, of a second detail from Figure 2, shown in two different operating conditions;
Figure 6 is a schematic side view, with some parts cut away for clarity, of a third detail from Figure 2;
Figure 7 is a schematic plan view, with some parts cut away for clarity, of a fourth detail from Figure 2;
Figure 8 is a schematic plan view, with some parts cut away for clarity, of a second detail of the plant of Figure 1;
Figure 9 is a schematic side view, with some parts cut away for clarity, of the detail of Figure 8; and
Figure 10 is a schematic plan view, with some parts cut away for clarity, of another embodiment of the detail of Figures 8 and 9.;

### Detailed Description of the Preferred Embodiments of the Invention

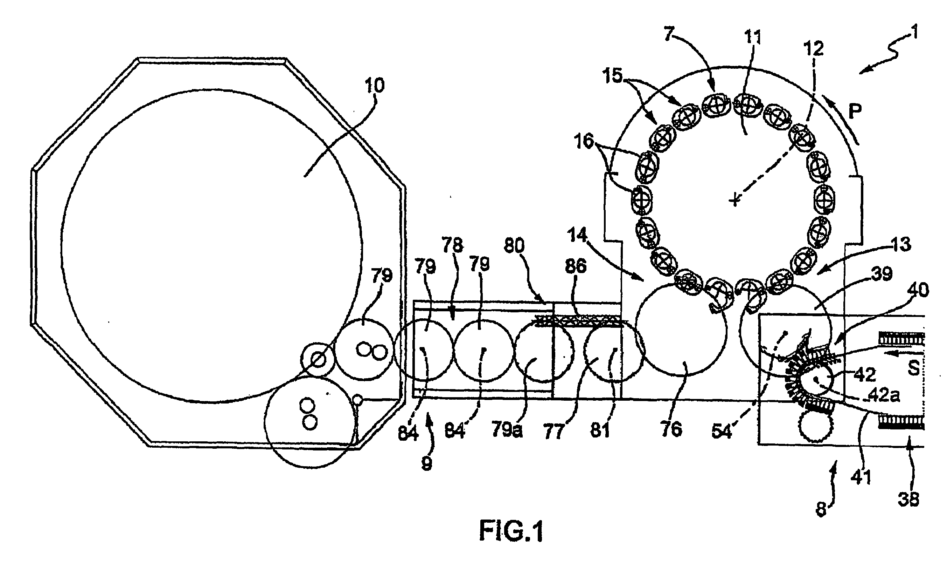

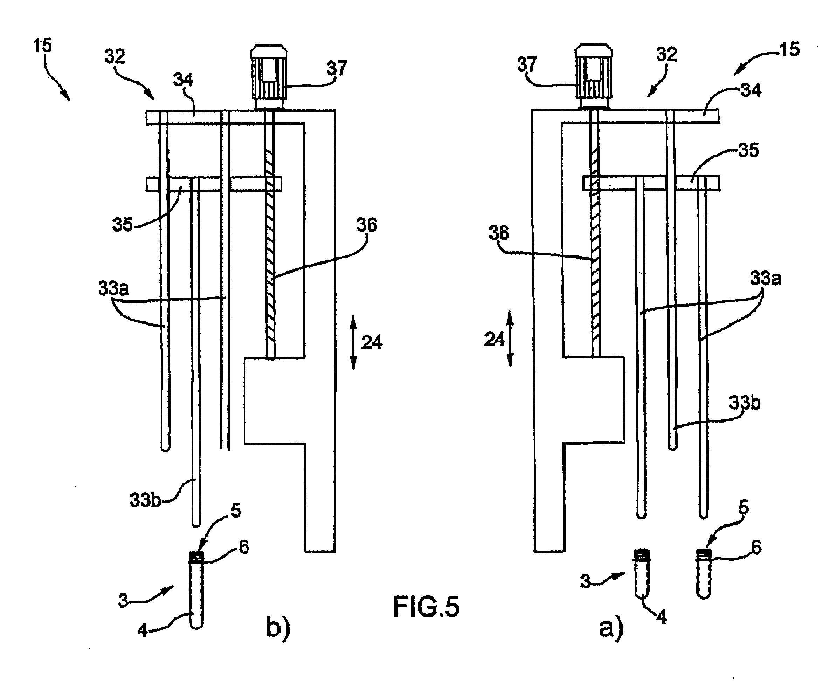

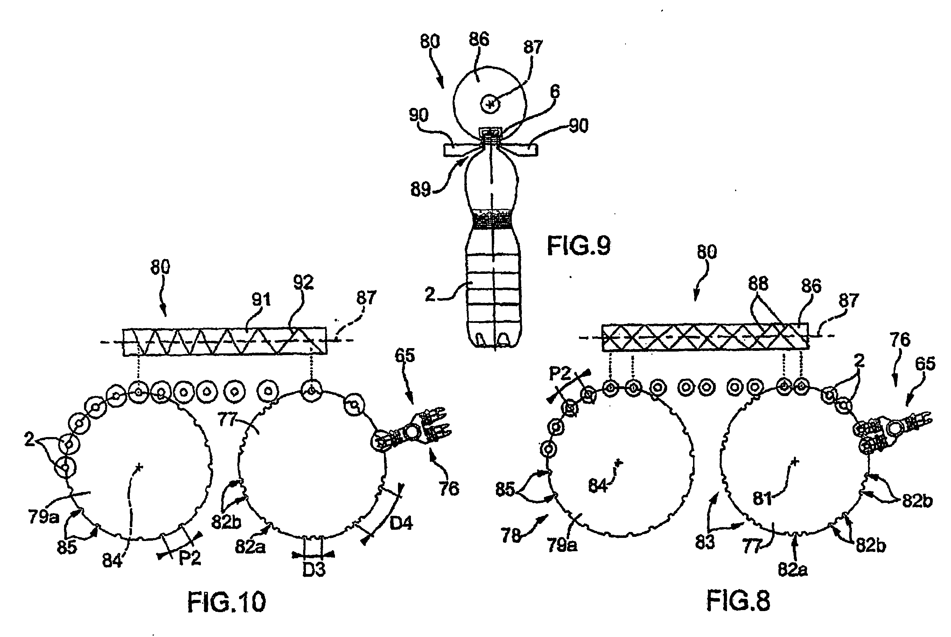

With reference to Figure 1, the numeral 1 denotes in its entirety a plant for blow-moulding plastic containers, in this particular case, plastic bottles 2 (Figure 9), from respective parisons 3 of known type (Figure 5), each of which comprises an elongated cup-shaped body 4 having an externally threaded open end 5, and an annular neck 6 extending radially outwards from the outside surface of the body 4 itself.

The plant 1 comprises a blow-moulding machine 7 for blow-moulding the bottles 2, a line 8 for feeding the parisons 3 to the machine 7, and a line 9 for feeding the bottles 2 from the machine 7 to a customary filling machine 10.

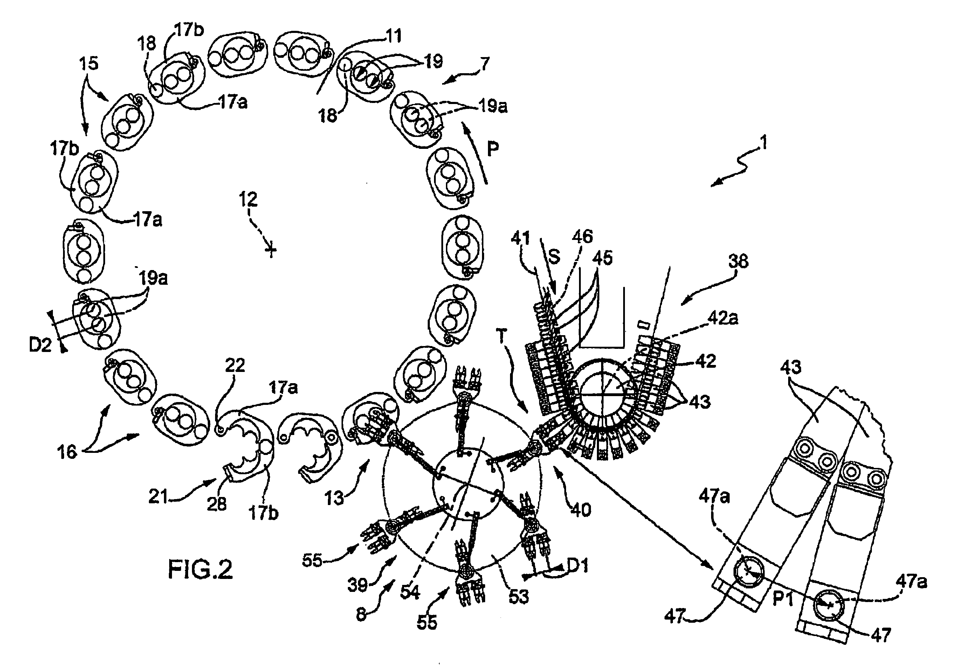

As illustrated in Figures 1 and 2, the machine 7 comprises a blow-moulding wheel 11 mounted in such a way as to rotate continuously (counterclockwise in Figures 1 and 2) about its longitudinal axis 12, which is substantially vertical and at right angles to the drawing plane of Figures 1 and 2. The wheel is connected to the lines 8 and 9 at a first and a second transfer station 13, 14, respectively, and is equipped with a plurality of moulding units 15 which are mounted round the edge of the wheel 11, are uniformly distributed around the axis 12 according to a predetermined spacing, and are advanced by the wheel 11 along a circular path P around the axis 12 and through the stations 13, 14.

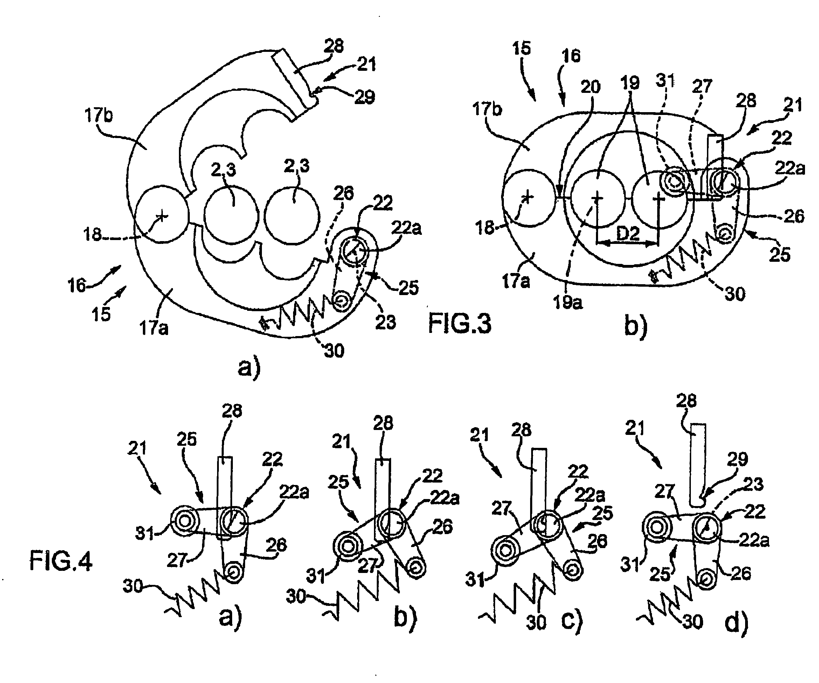

Each unit 15 comprises an interchangeable mould 16 comprising, in the embodiment illustrated in Figures 2 and 3, two half-moulds 17, each hinged to the wheel 11 to rotate relative to the wheel 11, under the action of a drive device (not illustrated) about a substantially vertical pivot axis 18 parallel to the axis 12 between a position for opening (Figure 3a) and a position for closing (Figure 3b) two moulding cavities 19, each having the shape of a bottle 2 and a longitudinal axis 19a parallel to the axis 18, being open to the outside at a hole at the top of it smaller in diameter than the neck 6 of a parison 3, and acting in conjunction with a pneumatic device of known type, not illustrated, designed to blow compressed air into the parison 3 inside the cavity 19 to mould the respective bottle 2.

The two half-moulds 17 are oriented in such a way that they are closed in a closing plane 20 substantially tangent to the path P and are locked in position by a locking device 21 comprising a cylindrical rod 22 having a longitudinal axis 23 parallel to the axis 12, extending through one of the two half-moulds 17 (hereinafter denoted by the reference 17a) along a vertical line 24 and being rotatably coupled to the half-mould 17a to rotate, relative to the half-mould 17a, about the axis 23 itself.

The rod 22 comprises at least one undercut portion 22a limited by a flat face parallel to the axis 23, and has keyed to it a rocker arm 25 mounted coaxially with the axis 23 and in turn comprising two arms 26, 27 which extend radially outwards from the axis 23 itself.

The device 21 also comprises a latch 28, elongated in shape, which extends transversally to the line 24, is fixed to the other half-mould 17 (hereinafter denoted by the reference 17b), and has an indent 29 formed on the latch 28 along the line 24 to receive and retain the portion 22a.

During the movement of the unit 15 from the station 13 to the station 14, the two half-moulds 17a, 17b are in their closed position, and a spring 30, interposed between the arm 26 and the half-mould 17a holds the rod 22 and the latch 28 in a normally locked position (Figure 4a), where the portion 22a engages the indent 29 to prevent the mould 16 from opening.

During the movement of the unit 15 from the station 14 to the station 13, the rod 22 is moved against the action of the spring 30 to a released position (Figure 4b), where the portion 22a disengages the indent 29 to enable the two half-moulds 17a, 17b to move (Figures 4c and 4d) to the open position by engaging a tappet roller 31 mounted on the arm 27 in a cam (not illustrated) designed to control the angular position of the rocker arm 25 around the axis 23.

In connection with the above, it should be noted that the two half-moulds 17a, 17b move relative to each other through different angles between the open and closed positions of the mould 16. More specifically, the angle of movement of the half-mould 17 located radially towards the outside of the path P, namely, the half-mould 17b, is greater than the angle of movement of the half-mould 17 located radially towards the inside of the path P, namely, the half-mould 17a.

With reference to Figure 5, the unit 15 also comprises a stretching unit 32, mounted above the mould 16 and, in this particular embodiment, comprising three stretching rods 33 parallel to each other and to the line 24, two of which (hereinafter denoted by the reference 33a) are mounted in a position coaxial with the cavities 19, and the other (hereinafter denoted by the reference 33b) extends between the rods 33a.

The rods 33a, 33b are slidably coupled to both a mounting bracket 34 fixed to the wheel 11, and to a mounting plate 35 that is in turn coupled by a lead nut and screw mechanism to an output shaft 36 of an electric motor 37 fixed to the bracket 34, and are selectively locked on the bracket 34 or on the plate 35 along the line 24 by means of customary fastening screws not illustrated.

As illustrated in Figure 5a, when the moulds 16, that is to say, the moulds with two moulding cavities 19, are mounted on the wheel 11, the rod 33b is locked axially on the bracket 34 and the rods 33a are locked axially on the plate 35 and are driven by the motor 37 along the line 24 between respective raised positions (Figure 5a), where the rods 33a are positioned substantially outside the respective parisons 3, and respective lowered positions (not illustrated), where the rods 33a engage the respective parisons 3 in such a way as to stretch them axially along the line 24.

As illustrated in Figure 5b, when the moulds 16 are replaced with moulds (not illustrated) having a single central moulding cavity each, for blow-moulding a bottle 2 of larger size, the rods 33a are locked axially on the bracket 34 and the rod 33b is locked axially on the plate 35 and is driven by the motor 37 along the line 24 between a raised position (Figure 5b), where the rod 33b is positioned substantially outside the respective parison 3, and a lowered position (not illustrated), where the rod 33b engages the respective parison 3 in such a way as to stretch it axially along the line 24.

It may be inferred from the foregoing that changing the moulds of the blow-moulding units 15 does not necessitate changing the related stretching units 32 and that setup times are therefore relatively short.

In an embodiment that is not illustrated, when the wheel 11 mounts the moulds 16, that is to say, the moulds with two moulding cavities 19, the rod 33b must be removed and, when the moulds 16 are replaced with moulds (not illustrated) having a single central moulding cavity each, the rods 33a must be removed.

With reference to Figures 1 and 2, the feed line 8 comprises a heating device 38 for thermally conditioning the plastic material the parisons 3 are made of to a temperature greater than their glass transition temperature, and a transfer wheel 39 connected to the device 38 at a transfer station 40 and to the blow-moulding wheel 11 at the station 13.

The device 38 comprises an endless chain conveyor 41 that is trained around two pulleys 42 (only one of which is illustrated in Figures 1 and 2) rotatably mounted to turn about respective longitudinal axes 42a parallel to the line 24, extends through at least one customary oven not illustrated, and mounts a plurality of pick-up and transporting members 43 uniformly distributed along the conveyor 41 and advanced by the conveyor 41 itself along a looped path S.

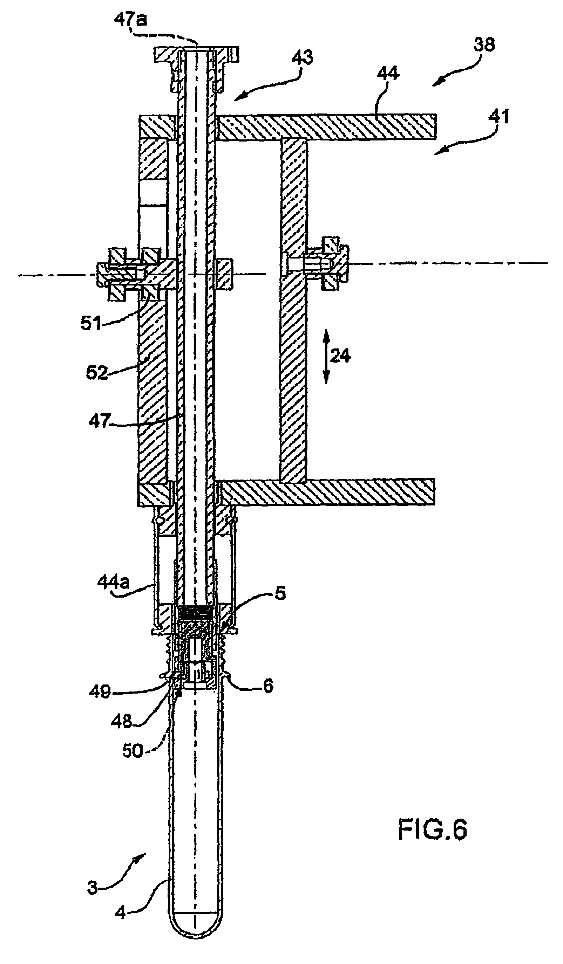

As illustrated in Figures 2 and 6, each member 43 comprises a tubular guide element 44 that is hooked up to the conveyor 41, extends along the line 24, is held in the correct position by engagement with a tappet roller 45 at a cam 46, and is slidably engaged by a respective pick-up rod 47 whose longitudinal axis 47a is parallel to the line 24.

The rod 47 is equipped with a plurality of balls 48 that are uniformly distributed around the axis 47a, are seated in respective housings 49 formed radially on a bottom end of the rod 47 protruding to the outside of the element 44, and protrude radially outwards from the respective housings 49 under the pushing action of respective springs 50 mounted inside the respective housings 49 transversally to the line 24.

The rod 47 is mobile under the pushing action of a tappet roller 51 placed in contact with a cam 52, along the line 24 between a lowered position (not illustrated), where the rod 47 extends inside the respective parison 3 to allow the balls 48 to grip the parison 3 under the pushing action of the respective springs 50, and a raised position (Figure 6), where the rod 47 disengages the parison 3.

The member 43 further comprises an interchangeable limit stop block 44a that protrudes downwardly from the element 44 coaxially with the axis 47a to come into contact with the end 5 of the parison 3, is removably mounted on the element 44, and can be replaced according to the size and/or shape of the end 5 itself.

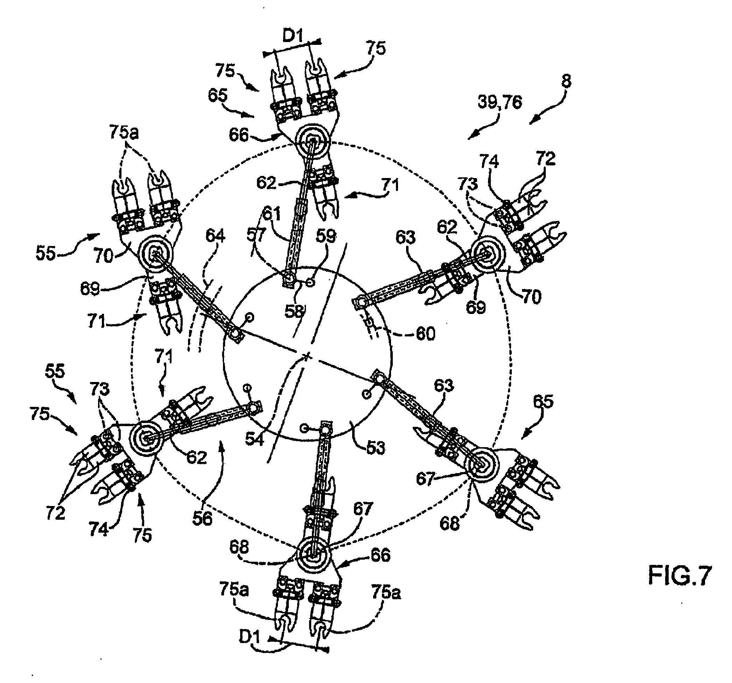

With reference to Figures 2 and 7, the wheel 39 comprises a drum 53 mounted to turn continuously about its substantially vertical longitudinal axis 54 parallel to the line 24, and a plurality of pick-up and transporting units 55 (in this particular embodiment six pick-up and transporting units 55) that are mounted along a peripheral edge of the drum 53, protrude radially outwards from the drum 53, and are advanced by the drum 53 itself around the axis 54 and through the stations 13 and 40.

Each unit 55 comprises a supporting rocker arm 56 that is hinged to the drum 53 to turn relative to the drum 53 itself about a pivot axis 57 substantially parallel to the line 24, and is equipped, at its first arm 58, with a tappet roller 59 in contact with a cam 60 designed to control the angular position of the rocker arm 56 around the axis 57 itself.

The rocker arm 56 also comprises a second, elongated arm 61 slidably engaged by a slider 62 that is equipped with a tappet roller 63 in contact with a cam 64 designed to control the position of the slider 62 along the arm 61, and supports at a free end of it, protruding to the outside of the arm 61 itself, a pick-up unit 65 comprising a rocker arm 66 hinged to the slider 62 to turn relative to the slider 62 and under the action, in this embodiment, of an electric motor 67 mounted on the slider 62, about a pivot axis 68 parallel to the line 24.

The rocker arm 66 has two arms 69, 70, opposite each other. The arm 69 mounts a pick-up element 71 having the shape of a fork and comprising two arms 72 which are mounted to oscillate about respective pivot axes 73 parallel to the line 24 between a position of releasing (not illustrated) and a position of clamping (Figure 7) a respective parison 3, and which a spring 74 interposed between the arms 72 normally holds in the clamping position where the arms 72 grip the parison 3 above the neck 6.

The arm 70 mounts two pick-up elements 75 entirely equivalent to the element 71, parallel to each other and positioned side by side, having concavities facing away from the concavity of the element 71, and further having respective longitudinal axes 75a that are parallel to the line 24 and spaced from each other at a distance D1 equal to the distance D2 between the longitudinal axes 19a of the two moulding cavities 19 of one mould 16.

In connection with the above, it should be noted that:
according to the number of moulding cavities 19 in each mould 16, the pick-up elements 71, 75 are selectively oriented by the respective electric motors 67 about the respective axes 68 between respective operating positions where the pick-up elements 71, 75 are oriented towards the outside of the wheel 39, and respective rest positions where the pick-up elements 71, 75 are oriented towards the inside of the wheel 39;
by combining the movements of the rocker arms 56 about the respective axes 57 with the movements of the sliders 62 along the respective arms 61 and with the movements of the rocker arms 66 about the respective axes 68, the elements 71, 75 in their operating positions are kept substantially parallel to the path P at the station 13 and parallel to the path S at the station 40; and
the station 40 for transferring the parisons 3 from the conveyor 41 to the wheel 39 is positioned along a curved stretch T of the path S, preferably a stretch T around one of the pulleys 42, where the spacing P1 between the rods 47, and hence between the parisons 3, is equal to the distance D1 and hence to the distance D2, and different from the spacing between the rods 47 and, hence between the parisons 3, along the straight stretches of the path S.

From the above it may be inferred that the position of the station 40 and the shape of the wheel 39 make it possible to set up the plant 1 quickly and easily not only using moulds 16 with two moulding cavities 19 but also using moulds (not illustrated) with a single moulding cavity.

In another embodiment that is not illustrated, the rocker arms 66 are eliminated and replaced with interchangeable pick-up units, each of which is hinged to the respective slider 62 to oscillate about the respective axis 68 under the control of a tappet roller engaged in a cam, and which is equipped with one pick-up element 71 or two pick-up elements 75.

As illustrated in Figure 1, the feed line 9 comprises: a transfer wheel 76 that is connected with the wheel 11 at the station 14, is entirely equivalent to the wheel 39 and will not therefore be described in further detail; a wheel 77 for extracting the bottles 2 from the pick-up elements 71, 75 of the transfer wheel 76; and a train 78 of feed wheels 79 connected to the wheel 77 through an interposed dispensing device 80 and designed to feed the bottles 2 to the filling machine 10.

With reference to Figure 8, the wheel 77 is mounted to rotate continuously about its longitudinal axis 81 parallel to the line 24, and is equipped with a plurality of semi-cylindrical pockets 82 formed along a peripheral edge of the wheel 77, open radially towards the outside, each designed to receive and retain a bottle 2, and divided into a plurality of groups 83 of pockets 82 equally spaced around the axis 81 and each comprising, in this particular embodiment, three pockets 82, of which one (hereinafter denoted by the reference 82a) is positioned between the other two (hereinafter denoted by the reference 82b) in turn positioned from each other at a distance D3 equal to the distances D1 and D2.

Each wheel 79 is mounted to rotate continuously about its longitudinal axis 84 parallel to the line 24, and is equipped with a plurality of semi-cylindrical pockets 85 formed along a peripheral edge of the wheel 79, open radially towards the outside, each designed to receive and retain a bottle 2, and uniformly distributed around the axis 84 according to a spacing P2 equal to the spacing of the dispensing nozzles (not illustrated) of the filling machine 10.

In this connection it should be noted that the spacing P2 is greater than the distance D3 and less than a distance D4 between two adjacent pockets 82a and that the distance D4 is also equal to the spacing between the moulds 16 on the blow-moulding wheel 11 and is therefore different from the distance D2.

As illustrated in Figures 8 and 9, the dispensing device 80 comprises, in this embodiment, a screw feeder 86, that is mounted to rotate continuously about its longitudinal, substantially horizontal axis 87 transversal to the line 24, extends between the wheel 77 and the infeed wheel 79 (hereinafter denoted by the reference 79a) of the train 78 of wheels 79, has two starts 88, that is to say, a number of starts equal to the number of moulding cavities 19 of one mould 16, is designed to engage the bottles 2 above the respective necks 6, and acts in conjunction with a guide channel 89 which extends parallel with the axis 87, which is slidably engaged by the bottles 2 and which is delimited by two side walls 90 designed to support the bottles 2 under the respective necks 6.

The embodiment illustrated in Figure 10 differs from the one illustrated in the drawings described up to now only in that:
the moulds 16 with two moulding cavities 19 are eliminated and replaced with moulds (not illustrated) having only one moulding cavity;
the pick-up elements 71, 75 operate and come to rest at positions different from the above; and
the screw feeder 86 is eliminated and replaced with a screw feeder 91 having a single start 92.

In an embodiment that is not illustrated, the dispensing device 80 is eliminated and replaced with a customary, variable spacing transfer wheel.

The operation of the plant 1 will now be described with reference to the moulds 16 with two moulding cavities 19 and starting from an instant where the pick-up elements 71, 75 of the transfer wheels 39, 76 have been moved to their rest and operating positions, respectively.

The conveyor 41 feeds the parisons 3 one after the other to the station 40 where the spacing P1 of the parisons 3 is equal to the distance D1 between the pick-up elements 75 of each pick-up unit 65 of the wheel 39 so that each unit 65 can pick up a pair of parisons 3 from the conveyor 41.

Each pick-up unit 65 is then advanced by the wheel 39 through the transfer station 13 in step with a respective mould 16, whose half-moulds 17a, 17b are opened at the station 14 after the respective rod 22 has been moved to the released position in order to drop the parisons 3 into the respective moulding cavities 19.

At this point, the two half-moulds 17a, 17b are closed; the rod 22 is moved by the spring 30 to the latch 28 locked position; and the bottles 2 are moulded as the mould 16 advances from the station 13 to the station 14, where the mould 16 is opened to enable the pick-up elements 75 of one pick-up unit 65 of the transfer wheel 76 to extract the bottles 2 just moulded.

After that, the bottles 2 are first transferred by the wheel 76 into the pockets 82b of one group 83 of pockets 82 on the extraction wheel 77, are then advanced by the wheel 77 to the infeed end of the channel 89 and by the screw feeder 86 along the channel 89 and, lastly, are transferred by the screw feeder 86 into the pockets 85 of the wheel 79a according to the aforementioned spacing P2.

Operation of the plant 1 with moulds (not illustrated) having a single moulding cavity involves simply replacing the moulds 16 with the other moulds, moving the pick-up elements 71, 75 of the transfer wheels 39, 76 to their operating and rest positions, respectively, and replacing the screw feeder 86 with the screw feeder 91. It should be noted that, in this case, each bottle 2 is first transferred by the wheel 76 into the pocket 82a of one group 83 of pockets 82 on the extraction wheel 77, is then advanced by the wheel 77 to the infeed end of the channel 89 and by the screw feeder 91 along the channel 89 and, lastly is transferred by the screw feeder 91 into a pocket 85 of the wheel 79a according to the aforementioned spacing P2.

From the above it may be inferred that the position of the station 40, the shape of the transfer wheels 39, 76 and the presence of the screw feeders 86, 91 make it possible to set up the plant 1 quickly and easily not only using moulds 16 with two moulding cavities 19 but also using moulds (not illustrated) with a single moulding cavity, and to feed the same filling machine 10 and according to the same spacing P2 with bottles 2 of different sizes made in moulds 16 with two moulding cavities 19 as well as in moulds (not illustrated) with a single moulding cavity.

Lastly, it should be noted that, preferably, the assembly composed of the blow-moulding wheel 11, the transfer wheels 39, 76, the extraction wheel 77 and the screw feeders 86, 91 is driven by one drive motor (not illustrated), while the chain conveyor 41 and the train 78 of feed wheels 79 may be driven either by a single drive motor (not illustrated) or, alternatively, by separate motors (not illustrated) synchronized with each other. Indeed, since the use of moulds 16 with two moulding cavities 19 confers on the blow-moulding machine 7 a production capacity that is twice the production capacity conferred on the blow-moulding machine 7 by the use of moulds (not illustrated) with a single moulding cavity, the feed speeds of the conveyor 41 and of the train 78 of feed wheels 79 are selectively controlled in such a way that when the machine 7 mounts moulds 16 with two moulding cavities 19 the speeds are substantially twice the speeds imparted to the conveyor 41 and to the train 78 of feed wheels 79 when the machine 7 mounts moulds (not illustrated) with a single moulding cavity.

In particular, according to the invention, the plant comprises means for regulating the speeds of the first and second feed lines 41, 78, 79 of the blow-moulding line 7 and of the first and second transfer wheels 39, 76 according to the number of moulding cavities 19 of the moulding units 15, connected to the actuating means to vary the speeds of the first and second feed lines 41, 78, 79 relative to the speeds of the blow-moulding line 7 and of the first and second transfer wheels 39, 76 according to a ratio that is a function of the number of moulding cavities 19.

These regulating means (not illustrated in the drawings) preferably comprise a programmed electronic card for driving the actuators of the first and second feed lines 41, 78, 79, of the blow-moulding line 7 and of the first and second transfer wheels 39, 76. For example, the actuators comprise electric motors controlled by respective inverters and the regulating means (that is, the electronic card) are connected to the inverters to drive them. In this case, the regulating means operate automatically.

Alternatively, the regulating means may be mechanical and operated automatically or manually.

Preferably, the regulating means are designed to vary the speeds of the first and second feed lines 41, 78, 79 proportionally to the number of moulding cavities 19 of the moulding units 15 relative to the speeds of the blow-moulding line 7 and of the first and second transfer wheels 39, 76.

Further, the regulating means are preferably connected to the dispensing device 80 to regulate its speed relative to the speeds of the blow-moulding line 7 and of the first and second transfer wheels 39, 76 according to a fixed ratio to the variable number of moulding cavities 19.

The regulating means are also connected to the further actuating means in order to regulate their speed relative to the speeds of the blow-moulding line 7 and of the first and second transfer wheels 39, 76 according to a fixed ratio to the variable number of moulding cavities 19.

The regulating means are also connected to the pick-up and transport units 65 to select the pick-up and transport member according to the number of moulding cavities 19.

Preferably also provided is an orienting device 67 which is designed to selectively move the pick-up and transport members 69, 70 between respective rest positions and respective operating positions according to the number of moulding cavities 19 in the moulding units 15 mounted on the blow-moulding line 7, and which is connected to the pick-up and transport units 65 to orient the pick-up and transport members 69, 70 according to the number of moulding cavities 19.

The invention also provides a method for blow-moulding plastic containers 2 from respective parisons 3.

The method according to the invention comprises a step of regulating the speeds of a blow-moulding line 7 equipped with a plurality of moulding units 15 having one or more cavities 19 for blow-moulding respective containers 2, of a first transfer wheel 39 for transferring the parisons 3 into the respective moulding cavities 19, of a second transfer wheel 76 to pick up the containers 2 from the respective moulding cavities 19, of a first feed line 41 for feeding the parisons 3 in succession to the first transfer wheel 39, and of a second feed line 78, 79 for feeding the containers 2 individually from the second transfer wheel 76 to a filling machine 10, according to the number of moulding cavities 19 in the moulding units 15, varying the speeds of the first and second feed lines 41, 78, 79 relative to the speeds of the blow-moulding line 7 and of the first and second transfer wheels 39, 76 according to a ratio that is a function of the number of moulding cavities 19.

In particular, the ratio is increased according to a linear function when the number of moulding cavities 19 is increased.

The speed regulating step is preferably automatic but, alternatively, the speed regulating step might also be manual.

According to the invention, therefore, the ratio between the speeds of the first and second transfer wheels 39, 76 and the speed of the blow-moulding line 7 remains the same even when the number of moulding cavities 19 in the moulding units 15 changes; at the same time, when the number of cavities 19 in the moulding units 15 increases, the ratio between the speeds of the first and second feed lines 41, 78, 79 and the speed of the blow-moulding line 7 is increased proportionally to the number of cavities.

That means production output per hour is always the maximum whatever the size of the containers to be blow-moulded and filled.

## Claims

1. A blow-moulding plant for making plastic containers (2) from respective parisons (3), and comprising:
- a blow-moulding line (7) equipped with a plurality of moulding units (15) having one or more cavities (19) for blow-moulding respective containers (2);
- at least one first transfer wheel (39) for transferring the parisons (3) into the respective moulding cavities (19);
- at least one second transfer wheel (76) to pick up the containers (2) from the respective moulding cavities (19);
- a first feed line (41) for feeding the parisons (3) in succession to the first transfer wheel (39);
- a second feed line (78, 79) for feeding the containers (2) individually from the second transfer wheel (76) to a filling machine (10);
- actuating means for moving the first and second feed lines (41, 78, 79) at respective variable feed speeds;
the plant being **characterized in that** it comprises means for regulating the speed of the first and second feed lines (41, 78, 79), of the blow-moulding line (7) and of the first and second transfer wheels (39, 76) according to the number of moulding cavities (19) of the moulding units (15), connected to the actuating means to vary the speeds of the first and second feed lines (41, 78, 79) relative to the speeds of the blow-moulding line (7) and of the first and second transfer wheels (39, 76) according to a ratio that is a function of the number of moulding cavities (19).

2. The plant according to claim 1, wherein the regulating means are designed to vary the speeds of the first and second feed lines (41, 78, 79) proportionally to the number of moulding cavities (19) of the moulding units (15) relative to the speeds of the blow-moulding line (7) and of the first and second transfer wheels (39, 76).

3. The plant according to claim 1 or 2, comprising a dispensing device (80) for feeding the containers (2) to the second feed line (78, 79) according to a defined spacing (P2), the speed regulating means being connected to the dispensing device (80) in order to regulate its speed relative to the speeds of the blow-moulding line (7) and of the first and second transfer wheels (39, 76) according to a fixed ratio to the variable number of moulding cavities (19).

4. The plant according to claim 3, comprising further actuating means for moving the first transfer wheel (39), the blow-moulding line (7), the second transfer wheel (76) and the dispensing device (80), the speed regulating means being connected to the further actuating means in order to regulate their speed relative to the speeds of the blow-moulding line (7) and of the first and second transfer wheels (39, 76) according to a fixed ratio to the variable number of moulding cavities (19).

5. The plant according to any of the foregoing claims, wherein each transfer wheel (39, 76) comprises a plurality of pick-up and transporting units (65) mounted around the transfer wheel (39, 76); each pick-up and transporting unit (65) in turn comprising at least two pick-up and transporting members (69, 70) for feeding, respectively, a first number of parisons (3) or containers (2) and a second number of parisons (3) or containers (2) different from the first number, the regulating means being connected to the pick-up and transport units (65) to select the pick-up and transport member according to the number of moulding cavities (19).

6. The plant according to claim 5, further comprising an orienting device (67) which is designed to selectively move the pick-up and transport members (69, 70) between respective rest positions and respective operating positions according to the number of moulding cavities (19) in the moulding units (15) mounted on the blow-moulding line (7), and which is connected to the pick-up and transport units (65) to orient the pick-up and transport members (69, 70) according to the number of moulding cavities (19).

7. The plant according to any of the foregoing claims, wherein each moulding unit (15) moves along a predetermined path (P), comprises two half-moulds (17a, 17b) mobile relative to each other between a position for opening and a position for closing the respective moulding cavities (19) and has a plane (20) where the two half-moulds (17a, 17b) close and which is substantially parallel to the path (P).

8. The plant according to any of the foregoing claims, further comprising a first drive motor for at least controlling the two transfer wheels (39, 76) and the blow-moulding line (7) and at least a second drive motor for controlling the first and second feed lines (41, 78, 79).

9. A method for blow-moulding plastic containers (2) from respective parisons (3) **characterized in that** it comprises a step of regulating the speeds of a blow-moulding line (7) equipped with a plurality of moulding units (15) having one or more cavities (19) for blow-moulding respective containers (2), of a first transfer wheel (39) for transferring the parisons (3) into the respective moulding cavities (19), of a second transfer wheel (76) to pick up the containers (2) from the respective moulding cavities (19), of a first feed line (41) for feeding the parisons (3) in succession to the first transfer wheel (39) and of a second feed line (78, 79) for feeding the containers (2) individually from the second transfer wheel (76) to a filling machine (10), according to the number of moulding cavities (19) in the moulding units (15), varying the speeds of the first and second feed lines (41, 78, 79) relative to the speeds of the blow-moulding line (7) and of the first and second transfer wheels (39, 76) according to a ratio that is a function of the number of moulding cavities (19).

10. The method according to claim 9, wherein the ratio is increased according to a linear function when the number of moulding cavities (19) is increased.

## Patentansprüche

1. Blasformanlage zur Herstellung von Kunststoffbehältern (2) aus entsprechenden Vorformlingen (3), umfassend:
- eine Blasformlinie (7), die mit einer Vielzahl von Formeinheiten (15) ausgestattet ist, die eine oder mehrere Kavitäten (19) zum Blasformen entsprechender Behälter (2) aufweist;
- mindestens ein erstes Übertragungsrad (39) zur Übertragung der Vorformlinge (3) in die entsprechenden Formkavitäten (19);
- mindestens ein zweites Übertragungsrad (76) zur Aufnahme der Behälter (2) aus den entsprechenden Formkavitäten (19);
- eine erste Zuführlinie (41) zum aufeinanderfolgenden Zuführen der Vorformlinge (3) zum ersten Übertragungsrad (39);
- eine zweite Zuführlinie (78, 79) zum einzelnen Zuführen der Behälter (2) vom zweiten Übertragungsrad (76) zu einer Befüllungsmaschine (10);
- Aktivierungsmittel zur Bewegung der ersten und zweiten Zuführlinie (41, 78, 79) bei entsprechenden variablen Zuführgeschwindigkeiten;
wobei die Anlage **dadurch gekennzeichnet ist, dass** sie Mittel zur Regulierung der Geschwindigkeit der ersten und zweiten Zuführlinie (41, 78, 79), der Blasformlinie (7) und des ersten und zweiten Übertragungsrades (39, 76) gemäß der Anzahl an Formkavitäten (19) der Formeinheiten (15) umfasst, die mit den Aktivierungsmitteln verbunden sind, um die Geschwindigkeiten der ersten und zweiten Zuführlinie (41, 78, 79) relativ zu den Geschwindigkeiten der Blasformlinie (7) und des ersten und zweiten Übertragungsrades (39, 76) gemäß einem Verhältnis zu variieren, das eine Funktion der Anzahl an Formkavitäten (19) ist.

2. Anlage nach Anspruch 1, wobei die Regulierungsmittel dazu konzipiert sind, die Geschwindigkeiten der ersten und zweiten Zuführlinie (41, 78, 79) proportional zur Anzahl an Formkavitäten (19) der Formeinheiten (15) relativ zu den Geschwindigkeiten der Blasformlinie (7) und des ersten und zweiten Übertragungsrades (39, 76) zu variieren.

3. Anlage nach Anspruch 1 oder 2, umfassend eine Ausgabevorrichtung (80) zum Zuführen der Behälter (2) zur zweiten Zuführlinie (78, 79) gemäß einer definierten Beabstandung (P2), wobei die Mittel zur Regulierung der Geschwindigkeit mit der Ausgabevorrichtung (80) verbunden sind, um ihre Geschwindigkeit relativ zu den Geschwindigkeiten der Blasformlinie (7) und des ersten und zweiten Übertragungsrades (39, 76) gemäß einem festgelegten Verhältnis zur variablen Anzahl an Formkavitäten (19) zu regulieren.

4. Anlage nach Anspruch 3, umfassend weitere Aktivierungsmittel zum Bewegen des ersten Übertragungsrades (39), der Blasformlinie (7), des zweiten Übertragungsrades (76) und der Ausgabevorrichtung (80), wobei die Mittel zur Regulierung der Geschwindigkeit mit den weiteren Aktivierungsmitteln verbunden sind, um ihre Geschwindigkeit relativ zu den Geschwindigkeiten der Blasformlinie (7) und des ersten und zweiten Übertragungsrades (39, 76) gemäß einem festgelegten Verhältnis zur variablen Anzahl an Formkavitäten (19) zu regulieren.

5. Anlage nach einem der vorangehenden Ansprüche, wobei jedes Übertragungsrad (39, 76) eine Vielzahl an Aufnahme- und Transporteinheiten (65) umfasst, die um das Übertragungsrad (39, 76) herum montiert sind, wobei jede Aufnahme- und Transporteinheit (65) wiederum mindestens zwei Aufnahme- und Transportglieder (69, 70) zum Zuführen von jeweils einer ersten Anzahl an Vorformlingen (3) oder Behältern (2) und einer zweiten Anzahl an Vorformlingen (3) oder Behältern (2), die sich von der ersten Anzahl unterscheidet, umfasst, wobei die Regulierungsmittel mit den Aufnahme- und Transporteinheiten (65) verbunden sind, um das Aufnahme- und Transportglied gemäß der Anzahl an Formkavitäten (19) auszuwählen.

6. Anlage nach Anspruch 5, ferner umfassend eine Ausrichtungsvorrichtung (67), die dazu konzipiert ist, die Aufnahme- und Transportglieder (69, 70) zwischen entsprechenden Ruhepositionen und entsprechenden Betriebspositionen gemäß der Anzahl an Formkavitäten (19) in den Formeinheiten (15), die auf der Blasformlinie (7) montiert sind, selektiv zu bewegen, und die mit den Aufnahme- und Transporteinheiten (65) verbunden ist, um die Aufnahme- und Transportglieder (69, 70) gemäß der Anzahl an Formkavitäten (19) auszurichten.

7. Anlage nach einem der vorangehenden Ansprüche, wobei sich jede Formeinheit (15) entlang einer vorher festgelegten Bahn (P) bewegt, zwei Formhälften (17a, 17b) umfasst, die relativ zueinander zwischen einer Position zum Öffnen und einer Position zum Schließen der entsprechenden Formkavitäten (19) beweglich sind, und eine Ebene (20) aufweist, in der sich die beiden Formhälften (17a, 17b) schließen und die im Wesentlichen parallel zur Bahn (P) ist.

8. Anlage nach einem der vorangehenden Ansprüche, ferner umfassend einen ersten Antriebsmotor mindestens für das Steuern der beiden Übertragungsräder (39, 76) und der Blasformlinie (7) und mindestens einen zweiten Antriebsmotor zum Steuern der ersten und zweiten Zuführlinie (41, 78, 79).

9. Verfahren zum Blasformen von Kunststoffbehältern (2) aus entsprechenden Vorformlingen (3), **dadurch gekennzeichnet, dass** es einen Schritt des Regulierens der Geschwindigkeiten einer Blasformlinie (7), die mit einer Vielzahl von Formeinheiten (15) ausgestattet ist, die eine oder mehrere Kavitäten (19) zum Blasformen entsprechender Behälter (2) aufweist, eines ersten Übertragungsrades (39) zur Übertragung der Vorformlinge (3) in die entsprechenden Formkavitäten (19), eines zweiten Übertragungsrades (76) zur Aufnahme der Behälter (2) aus den entsprechenden Formkavitäten (19), einer ersten Zuführlinie (41) zum aufeinanderfolgenden Zuführen der Vorformlinge (3) zum ersten Übertragungsrad (39) und einer zweiten Zuführlinie (78, 79) zum einzelnen Zuführen der Behälter (2) vom zweiten Übertragungsrad (76) zu einer Befüllungsmaschine (10) gemäß der Anzahl an Formkavitäten (19) in den Formeinheiten (15) umfasst, wobei die Geschwindigkeiten der ersten und zweiten Zuführlinie (41, 78, 79) relativ zu den Geschwindigkeiten der Blasformlinie (7) und des ersten und zweiten Übertragungsrades (39, 76) gemäß einem Verhältnis variiert werden, das eine Funktion der Anzahl an Formkavitäten (19) ist.

10. Verfahren nach Anspruch 9, wobei das Verhältnis gemäß einer linearen Funktion höher ist, wenn die Anzahl an Formkavitäten (19) höher ist.

## Revendications

1. Installation de moulage par soufflage pour fabriquer des contenants en plastique (2) à partir d'ébauches respectives (3), et comprenant :
- une ligne de moulage par soufflage (7) équipée d'une pluralité d'unités de moulage (15) présentant une ou plusieurs cavités (19) pour mouler par soufflage des contenants respectifs (2) ;
- au moins une première roue de transfert (39) pour transférer les ébauches (3) dans les cavités de moulage respectives (19) ;
- au moins une seconde roue de transfert (76) pour prélever les contenants (2) dans les cavités de moulage respectives (19) ;
- une première ligne d'acheminement (41) pour acheminer les ébauches (3) l'une à la suite de l'autre vers la première roue de transfert (39) ;
- une seconde ligne d'acheminement (78, 79) pour acheminer les contenants (2) individuellement depuis la seconde roue de transfert (76) vers une remplisseuse (10) ;
- des moyens d'actionnement pour faire bouger la première et la seconde lignes d'acheminement (41, 78, 79) à des vitesses variables d'acheminement respectives ;
l'installation **se caractérisant en ce qu'**elle comprend des moyens pour régler la vitesse de la première et de la seconde lignes d'acheminement (41, 78, 79), de la ligne de moulage par soufflage (7) et de la première et de la seconde roues de transfert (39, 76) en fonction du nombre de cavités de moulage (19) des unités de moulage (15), reliés à des moyens d'actionnement pour varier les vitesses de la première et de la seconde lignes d'acheminement (41, 78, 79) par rapport aux vitesses de la ligne de moulage par soufflage (7) et de la première et de la seconde roues de transfert (39, 76) selon un rapport qui dépend du nombre des cavités de moulage (19).

2. Installation selon la revendication 1, dans laquelle les moyens de réglage sont conçus pour varier les vitesses de la première et de la seconde lignes d'acheminement (41, 78, 79) proportionnellement au nombre de cavités de moulage (19) des unités de moulage (15) par rapport aux vitesses de la ligne de moulage par soufflage (7) et de la première et de la seconde roues de transfert (39, 76).

3. Installation selon les revendications 1 ou 2, comprenant un dispositif de distribution (80) pour acheminer les contenants (2) vers la seconde ligne d'acheminement (78, 79) selon un espacement prédéfini (P2), les moyens de réglage de la vitesse étant reliés au dispositif de distribution (80) pour régler sa vitesse par rapport aux vitesses de la ligne de moulage par soufflage (7) et de la première et de la seconde roues de transfert (39, 76) en fonction d'un rapport fixe avec le nombre variable des cavités de moulage (19).

4. Installation selon la revendication 3, comprenant d'autres moyens d'actionnement pour faire bouger la première roue de transfert (39), la ligne de moulage par soufflage (7), la seconde roue de transfert (76) et le dispositif de distribution (80), les moyens de réglage de la vitesse étant reliés à d'autres moyens d'actionnement pour régler leur vitesse par rapport aux vitesses de la ligne de moulage par soufflage (7) et de la première et de la seconde roues de transfert (39, 76) en fonction d'un rapport fixe avec le nombre variable des cavités de moulage (19).

5. Installation selon l'une quelconque des revendications précédentes, dans laquelle chaque roue de transfert (39, 76) comprend une pluralité d'unités de préhension et de transport (65) montées autour de la roue de transfert (39, 76) ; chaque unité de préhension et de transport (65) comprenant, à son tour, au moins deux organes de préhension et de transport (69, 70) pour acheminer, respectivement, un premier nombre d'ébauches (3) ou de contenants (2) et un second nombre d'ébauches (3) ou de contenants (2) différent du premier nombre, les moyens de réglage étant reliés aux unités de préhension et de transport (65) pour sélectionner l'organe de préhension et de transport en fonction du nombre des cavités de moulage (19).

6. Installation selon la revendication 5, comprenant aussi un dispositif d'orientation (67) conçu pour faire bouger de façon sélective les organes de préhension et de transport (69, 70) entre des positions de repos respectives et des positions de fonctionnement respectives, en fonction du nombre des cavités de moulage (19) dans les unités de moulage (15) montées sur la ligne de moulage par soufflage (7), et qui est relié aux unités de préhension et de transport (65) pour orienter les organes de préhension et de transport (69, 70) en fonction du nombre des cavités de moulage (19).

7. Installation selon l'une quelconque des revendications précédentes, dans laquelle chaque unité de moulage (15) se déplace le long d'un parcours prédéterminé (P), comprend deux demi-moules (17a, 17b) mobiles, l'un par rapport à l'autre, entre une position d'ouverture et une position de fermeture des cavités de moulage respectives (19), et présente un plan (20) où les deux demi-moules (17a, 17b) se ferment et qui est essentiellement parallèle au parcours (P).

8. Installation selon l'une quelconque des revendications précédentes, comprenant également un premier moteur d'entraînement pour commander au moins les deux roues de transfert (39, 76) et la ligne de moulage par soufflage (7), et au moins un second moteur d'entraînement pour commander la première et la seconde lignes d'acheminement (41, 78, 79).

9. Méthode pour le moulage par soufflage de contenants en plastique (2) à partir d'ébauches respectives (3), **caractérisée en ce qu'**elle comprend une étape de réglage des vitesses d'une ligne de moulage par soufflage (7) équipée d'une pluralité d'unités de moulage (15) avec une ou plusieurs cavités (19) pour mouler par soufflage des contenants respectifs (2), d'une première roue de transfert (39) pour transférer les ébauches (3) dans les cavités de moulage respectives (19), d'une seconde roue de transfert (76) pour prélever les contenants (2) dans les cavités de moulage respectives (19), d'une première ligne d'acheminement (41) pour acheminer les ébauches (3) l'une à la suite de l'autre vers la première roue de transfert (39) et d'une seconde ligne d'acheminement (78, 79) pour acheminer les contenants (2) individuellement depuis la seconde roue de transfert (76) vers une remplisseuse (10), en fonction du nombre des cavités de moulage (19) dans les unités de moulage (15), variant les vitesses de la première et de la seconde lignes d'acheminement (41, 78, 79) par rapport aux vitesses de la ligne de moulage par soufflage (7) et de la première et de la seconde roues de transfert (39, 76) en fonction d'un rapport qui dépend du nombre des cavités de moulage (19).

10. Méthode selon la revendication 9, dans laquelle le rapport augmente selon une fonction linéaire quand le nombre des cavités de moulage (19) augmente.
